# FASCICULE DE BREVET EUROPEEN

(11) **EP 2 080 552 B1**
(45) Date de publication et mention de la délivrance du brevet: **14.07.2010**
(21) Numéro de dépôt: 09150749.1
(22) Date de dépôt: 16.01.2009
(51) Int. Cl.: B01J 13/16

(54) **Procédé d'encapsulation de produit lipophile ou hydrophile dans une membrane polysiloxane.**
Verfahren zur Einkapselung eines lipophilen oder hydrophilen Produkts in eine Polysiloxanhülle
Method of encapsulating a lipophilic or hydrophilic product in a polysiloxane membrane.

(30) Priorité: 21.01.2008 FR 0850364
(43) Date de publication de la demande: 22.07.2009
(73) Titulaire: Etablissements Robert Blondel, 76160 Saint Leger du Bourg Denis (FR)
(72) Inventeur: Balguerie, Yann, 76000 Rouen (FR); Bone, Stéphane, 76750 Estouteville Ecalles (FR)
(74) Mandataire: Pontet, Bernard

(56) Documents cités:
- DE-A1- 10 111 094
- GB-A- 2 416 524
- JP-A- 2001 038 193
- US-A1- 2006 204 872

## Description

La présente invention concerne un procédé d'encapsulation de produit lipophile, telle qu'une huile, ou hydrophile dans une membrane polysiloxane.

La plupart du temps, la membrane des microcapsules est constituée de matériaux organiques comme des polymères ou des huiles. Ces microcapsules sont fabriquées grâce à des techniques telles que la polymérisation interfaciale, la coacervation complexe, la séparation de phase, ... Cependant, la plupart des membranes polymères ont de mauvaises propriétés chimiques, une faible résistance mécanique et à la température. Il existe cependant quelques alternatives intéressantes telles que les résines mélamine formol mais la législation, de plus en plus drastique les concernant, empêchera à terme leur utilisation. L'utilisation d'une membrane à base de polysiloxane permet de résoudre un certain nombre de ces inconvénients.

L'encapsulation d'une substance active lipophile à l'intérieur d'une membrane silicone est récente.

La première approche consiste à condenser les silanes à l'interface huile/eau. C'est le cas du procédé décrit dans les brevets JP 4106398 et JP 32293398.

Plusieurs techniques consistent à émulsionner des substances actives lipophiles avec du TEOS (tétraéthoxysilane) dans l'eau, comme décrit dans le brevet US 6 238 650. Le brevet US 6 855 335 décrit la fabrication de microcapsules par hydrolyse basique de TEOS en présence d'APS. Les temps de process sont de l'ordre de 15 à 24 heures. Lorsque ce type de formulation est utilisé, il est préférable de vérifier que les structures obtenues sont bien des microcapsules et non pas des microsphères. Une microcapsule est caractérisée par la présence d'un coeur liquide entouré par une membrane solide, alors qu'une microsphère est constituée d'une substance liquide disséminée à l'intérieur d'une matrice solide.

D'autres brevets décrivent des procédés pour fabriquer des microcapsuies. Dans ie brevet GB 2 416 524, les microcapsules sont obtenues par l'intermédiaire d'un tensioactif cationique et l'utilisation de tétraalkoxy et trialkoxy silanes. Dans ce cas, la présence de tensioactif cationique permet de localiser les silanes à l'interface huile/eau. Cependant, le temps de process annoncé est d'au moins 12 heures.

Le but de la présente invention est de proposer un procédé permettant d'obtenir des microcapsules de polymère silicone dont la mise en oeuvre est plus rapide que les procédés connus, sans utiliser des produits toxiques tels que le formol ou l'acide fluorhydrique.

Ce but est atteint selon l'invention grâce à un procédé d'encapsulation de produit lipophile ou hydrophile dans une membrane polysiloxane, comprenant les étapes suivantes :
a/ on émulsionne ledit produit en présence d'un agent tensioactif cationique pour former des gouttelettes,
b/ on ajoute à l'émulsion un mélange d'acide acétique et d'acide formique,
c/ on ajoute ensuite au moins un silane,
d/ on hydrolyse le silane pour obtenir un silanol,
e/ on augmente le pH du milieu pour permettre la condensation du silanol et la formation de la membrane autour des gouttelettes contenant ledit produit.

Dans le cas d'un produit lipophile l'émulsion est effectuée dans l'étape a) dans l'eau. Dans le cas d'un produit hydrophile l'émulsion est effectuée dans l'huile.

Les essais ont montré que la mise en oeuvre du procédé selon l'invention était beaucoup plus rapide que celui décrit par exemple dans le brevet GB 2 416 524.

Ce résultat est principalement dû à l'utilisation du couple acide acétique/formique qui permet une hydrolyse rapide des silanes dans l'étape d), mais également à l'utilisation du tensioactif cationique permettant une migration rapide des silanols à l'interface huile/eau dans l'étape e). Cet agent tensioactif cationique peut être un dérivé de cellulose.

Le silane ajouté à l'émulsion dans l'étape c) peut être un mélange d'organosilanes XₙSi(OR)₄₋ₙ, où OR peut être un groupement méthoxy, éthoxy ou acétoxy, et où X peut être un groupement alkyl, aryl, ou un groupement fonctionnel aminé, sulfuré, vinylique, acrylique, halogéné etc. Le organosilanes peuvent être :
Bis(3-triéthoxysilylpropyl)amine, 3-Aminopropylméthyldiéthoxysilane,
Tétraéthyl orthosilicate, Phényltriéthoxysilane,
3-Aminopropyltriéthoxysilane, 3-Aminopropyltriméthoxysilane,
Tétraméthylorthosilicate, 3-Méthacryloxypropyltriméthoxysilane,
Tétraéthoxysilane, Méthyltriméthoxysilane, Vinyltriéthoxysilane,
Vinyltriméthoxysilane, Méthyltriéthoxysilane, Propyltriméthoxysilane,
Aminopropylméthyldiéthoxysilane,
3-Méthacryloxypropyltriméthoxysilane,
3-Mercaptopropyltriméthoxysilane,
N-(2-Aminoéthyl)-3-aminopropyltriméthoxysilane,
3-Glycidyloxypropyltriéthoxysilane.

Le mélange ci-dessus est constitué d'au moins deux organosilanes.

Dans l'étape e/, le pH du milieu est augmenté de préférence de 2 à 3 jusqu'à 5,5 environ, de préférence par l'ajout d'ammoniaque, de soude, ou de di-éthanol-amine.

D'autres particularités et avantages de l'invention apparaîtront encore dans la description ci-après.

Aux dessins annexés, donnés à titre d'exemples non limitatifs :
- la figure 1 est un schéma illustrant les gouttelettes de substance active lipophile en suspension dans l'eau,
- la figure 2 est un schéma illustrant l'attraction des silanols par les charges positives entourant les gouttelettes de substance active lipophile,
- la figure 3 est une microphotographie montrant les microcapsules obtenues selon ie procédé de l'invention.

L'invention repose premièrement sur la substitution de l'acide fluorhydrique, (produit très toxique utilisé dans les procédés d'encapsulation par silicone), par le couple acide formique/acide acétique pour la phase d'hydrolyse des silanes.

En plus de l'atout sécurité évident de l'invention, cela permet de réduire les temps d'hydrolyse par 3, induisant des réductions de coût de fabrication.

L'invention repose également sur le choix du tensioactif cationique limitant l'agrégation des particules à l'état sec, et permettant ainsi la transformation finale du produit en une poudre fluide. En effet les procédés connus ne permettent que d'obtenir un produit sous forme liquide et ceci limite l'utilisation ultérieure du produit.

L'invention ouvre donc de nouvelles perspectives d'utilisation des microcapsules silicones qui n'étaient pas permises jusque-là. Les microcapsules peuvent, par exemple, être incorporées dans une formule cosmétique en poudre, déposées sur un support souple (textile tissé ou non-tissé), mélangées à des produits gras n'acceptant pas l'eau, etc.

Le procédé, selon l'invention, permet également d'encapsuler des produits hydrophiles. Un tel résultat est atteint en réalisant une émulsion inverse eau dans huile dans l'étape a) à l'aide d'un tensioactif toujours cationique mais avec une HLB faible.

On va maintenant décrire en détails le procédé selon l'invention.

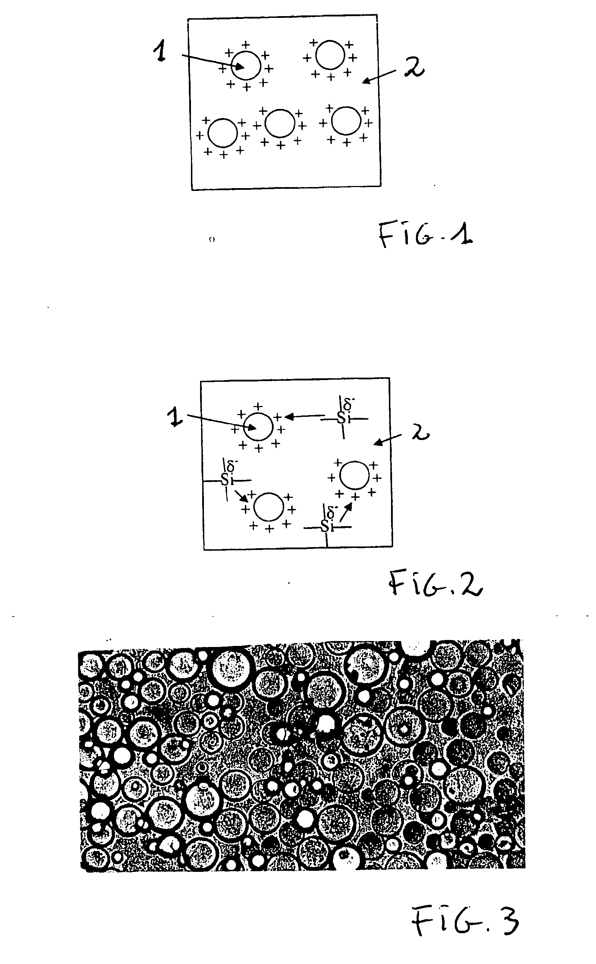

Dans une première étape, la substance active lipophile est émulsionnée dans l'eau à l'aide de tensioactifs dont l'un au moins est cationique pendant 0 à 30 minutes afin d'obtenir une émulsion dont la surface se charge positivement, comme représenté schématiquement sur la figure 1. Sur cette figure, la référence 1 désigne une gouttelette de substance active lipophile et la référence 2, l'eau.

Une fois l'émulsion réalisée, le milieu est acidifié à l'aide d'acide et d'acide formique afin de permettre par la suite une hydrolyse rapide des silanes. Le couple acide acétique/acide formique crée une synergie et permet de réaliser la fabrication des microcapsules en 4/5 heures.

Ensuite, les silanes sont ajoutés. Il est préférable de réaliser un mélange de silanes à partir de TEOS qui apporte de la rigidité à la membrane finale des microcapsules, avec au moins un autre organosilane XnSi(OR)4-n aminé ou, soufré, vinylique, acrylique ou encore halogène apportant des propriétés de surface spécifiques aux microcapsules (mouillabilité, réactivité, élasticité, etc.). Une quantité de 50 % en poids de TEOS est préférable dans le mélange. La première étape consiste à hydrolyser les silanes de la façon suivante (exemple d'un mélange 50/50 TEOS et MTES) :

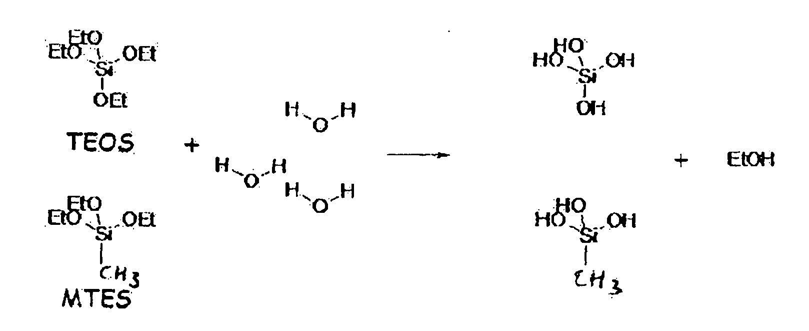

Le silicium est très électronégatif. Ainsi, les silanols ont tendance à migrer à la surface des gouttelettes d'actifs chargés positivement, comme montré sur la figure 2.

L'hydrolyse est maintenue pendant 2 heures. Pendant ce temps, les silanols migrent à la surface des gouttelettes 1. Il convient de noter que l'hydrolyse des silanes peut se faire de manière séparée afin de gagner du temps, les silanes étant ensuite introduits juste après l'émulsification et juste avant la condensation.

Une fois l'hydrolyse terminée et les silicates à la surface des gouttelettes, le pH de la solution est remonté afin de permettre la condensation (figure 4) et la formation de la membrane des microcapsules. La remontée du pH de 2-3 à 5,5 doit se faire progressivement en 15 minutes au moins et en moyenne 30 minutes.

Il est nécessaire de choisir correctement la base afin d'éviter la gélification de l'ensemble de la solution. L'ammoniaque, la soude et la di-éthanol-amine (DEA) peuvent être utilisés pour cette étape.

Il est préférable de stopper la remontée de pH à 5,5 afin que l'hydrolyse des silanes et la condensation des silanols soit lente, et ceci afin d'éviter la formation d'un gel irréversible et d'éviter également une condensation et donc une agglomération des particules entre elles. La réaction de condensation est la suivante :

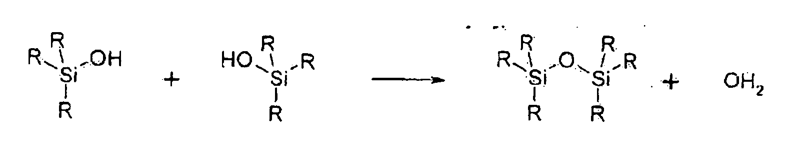

On donne ci-après un exemple de mode opératoire du procédé selon l'invention :

0,33 g de tensioactif non ionique (polyoxyéthylène Stéaryl Ether), 1 g de tensioactif cationique (Hydroxyéthylcellulose), 0,5 g de cotensioactif (méthylcellulose), 3,3 g d'acide acétique 80% et 1 g d'acide formique 30% sont introduits dans 50 g d'eau. Cette solution est mélangée à 500 rpm pendant 30 minutes afin de dissoudre les tensiocatifs 33,3 g d'actif est introduit puis émulsionné à 3000 rpm pendant 30 minutes, 8 g de TEOS et 8 g de MTES sont ajoutés. Le mélange est continué pendant 2 heures. Le pH de la solution est remonté à l'aide de 4 g d'ammoniaque à 25%, en 30 minutes à 5,5. La condensation est poursuivie pendant 2 heures afin d'obtenir une solution de microcapsules.

La figure 3 est une vue microphotographique montrant les microcapsules obtenues selon le procédé de l'invention. Les microcapsules présentent un diamètre compris entre 1 et quelques dizaines de microns.

Grâce à ce procédé, il est possible d'obtenir des extraits secs allant de 0 à 50%. Par pulvérisation ou séchage, les microcapsules peuvent être individualisées et transformées en une poudre.

On donne ci-après, quelques exemples d'utilisation des microcapsules selon l'invention.

Microcapsules fixées sur collants en polyamide pour obtenir des collants hydratants.

Microcapsules incorporées dans des pâtes à enduction pour obtenir des papiers parfumés, peintures à effet.

Microcapsules incorporées dans une formulation cosmétique pour obtenir une libération contrôlée de substance active.

Bien entendu l'invention n'est pas limitée aux exemples décrits ci-dessus et on peut apporter à ceux-ci de nombreuses modifications sans sortir du cadre de l'invention.

En effet, les points clés de l'invention sont l'utilisation du couple acide formique/acétique permettant d'une part la réduction du temps de process et d'autre part d'éviter l'utilisation d'acide fluorhydrique toxique. Le choix du couple tensioactif cationique et co-tensioactif cationique permet d'obtenir une présentation finale en poudre, ce que les procédés connus ne permettent pas d'obtenir, ce qui ouvre donc de nouvelles utilisations du produit dont la mise en oeuvre ultérieure est plus facile.

Par ailleurs, le procédé selon l'invention peut également s'appliquer à l'encapsulation des matières hydrophiles.

## Revendications

1. Procédé d'encapsulation de produit lipophile ou hydrophile dans une membrane polysiloxane comprenant les étapes suivantes :
a/ on émulsionne ledit produit en présence d'un agent tensioactif cationique pour former des gouttelettes,
b/ on ajoute à l'émulsion un mélange d'acide acétique et d'acide formique,
c/ on ajoute ensuite au moins un silane,
d/ on hydrolyse le silane pour obtenir un silanol,
e/ on augmente le pH du milieu pour permettre la condensation du silanol et la formation de la membrane autour des gouttelettes contenant ledit produit.

2. Procédé selon la revendication 1, **caractérisé en ce que** le silane ajouté à l'étape c) est un mélange d'organosilanes XₙSi(OR)₄₋ₙ, où OR peut être un groupement méthoxy, éthoxy, ou acétoxy, et où X peut être un groupement alkyl, aryl, ou un groupement fonctionnel aminé, sulfuré, vinylique, acrylique ou halogéné.

3. Procédé selon la revendication 2, **caractérisé en ce que** les organosilanes sont choisis parmi les suivants :
Bis(3-triéthoxysilylpropyl)amine, 3-Aminopropylméthyldiéthoxysilane,
Tétraéthyl orthosilicate, Phényltriéthoxysilane,
3-Aminopropyltriéthoxysilane, 3-Aminopropyltriméthoxysilane,
Tétraméthylorthosilicate, 3-Méthacryloxypropyltriméthoxysilane,
Tétraéthoxysilane, Méthyltriméthoxysilane, Vinyltriéthoxysilane,
Vinyltriméthoxysilane, Méthyltriéthoxysilane, Propyltriméthoxysilane,
Aminopropylméthyldiéthoxysilane,
3-Méthacryloxypropyltriméthoxysilane,
3-Mercaptopropyltriméthoxysilane,
N-(2-Aminoéthyl)-3-aminopropyltriméthoxysilane,
3-Glycidyloxypropyltriéthoxysilane.

4. Procédé selon l'une des revendications 1 à 3, **caractérisé en ce que** dans l'étape e), le pH du milieu est augmenté de 2 à 3 jusqu'à 5,5 environ.

5. Procédé selon la revendication 4, **caractérisé en ce que** le pH est augmenté par l'ajout d'ammoniaque, de soude ou de di-éthanol-amine.

6. Procédé selon l'une des revendications 1 à 5, **caractérisé en ce que** les microcapsules obtenues lors de l'étape e) sont individualisées par séchage ou pulvérisation pour obtenir une poudre.

7. Procédé selon l'une des revendications 1 à 6, **caractérisé en ce que** l'agent tensioactif cationique est un dérivé de cellulose.

## Claims

1. Method for the encapsulation of lipophilic or hydrophilic product in a polysiloxane membrane comprising the following steps:
a/ said product is emulsified in the presence of a cationic surfactant in order to form droplets,
b/ a mixture of acetic acid and formic acid is added to the emulsion,
c/ at least one silane is then added,
d/ the silane is hydrolyzed in order to obtain a silanol,
e/ the pH of the medium is increased in order to allow the condensation of the silanol and the formation of the membrane around the droplets containing said product.

2. Method according to claim 1, **characterized in that** the silane added in step c) is a mixture of organosilanes XₙSi(OR)₄₋ₙ, where OR can be a methoxy, ethoxy, or acetoxy group, and where X can be an alkyl, aryl group, or an aminated, sulphured, vinyl, acrylic or halogenated functional group.

3. Method according to claim 2, **characterized in that** the organosilanes are chosen from the following:
Bis(3-triethoxysilylpropyl)amine, 3-Aminopropylmethyldiethoxysilane,
Tetraethyl orthosilicate, Phenyltriethoxysilane,
3-Aminopropyltriethoxysilane, 3-Aminopropyltrimethoxysilane,
Tetramethylorthosilicate, 3-Methacryloxypropyltrimethoxysilane,
Tetraethoxysilane, Methyltrimethoxysilane, Vinyltriethoxysilane,
Vinyltrimethoxysilane, Methyltriethoxysilane, Propyltrimethoxysilane,
Aminopropylmethyldiethoxysilane,
3-Methacryloxypropyltrimethoxysilane,
3-Mercaptopropyltrimethoxysilane,
N-(2-Aminoethyl)-3-aminopropyltrimethoxysilane,
3-Glycidyloxypropyltriethoxysilane.

4. Method according to one of claims 1 to 3, **characterized in that** in step e), the pH of the medium is increased from 2 to 3 up to approximately 5.5.

5. Method according to claim 4, **characterized in that** the pH is increased by the addition of ammonia, soda or diethanolamine.

6. Method according to one of claims 1 to 5, **characterized in that** the microcapsules obtained during step e) are individualized by drying or spraying in order to obtain a powder.

7. Method according to one of claims 1 to 6, **characterized in that** the cationic surfactant is a cellulose derivative.

## Patentansprüche

1. Verfahren zur Einkapselung eines lipophilen oder hydrophilen Produkts in eine Polysiloxanhülle umfassend folgende Schritte:
a) man emulgiert besagtes Produkt in Anwesenheit eines kationischen Tensids, um Tröpfchen zu formen;
b) man fügt der Emulsion ein Gemisch aus Essigsäure und Ameisensäure bei;
c) man fügt anschliessend mindestens ein Silan bei;
d) man hydrolysiert das Silan, um ein Silanol zu erhalten;
e) man erhöht den pH des Mediums, um die Kondensation des Silanols und die Ausbildung einer Membran um die das besagte Produkt enthaltenden Tröpfchen zu erlauben.

2. Verfahren nach Anspruch 1, **dadurch gekennzeichent, dass** das im Schritt c) beigefügte Silan ein Gemisch aus Organosilane XₙSi(OR)₄₋ₙ ist, wobei OR eine Gruppe bestehend aus Methoxy, Ethoxy oder Acetoxy sein kann, und wobei X eine Gruppe bestehend aus Alkyl, Aryl oder eine funktionelle Gruppe bestehend aus Amino, Schwefel, Vinyl, Acryl oder Halogen sein kann.

3. Verfahren nach Anspruch 2, **dadurch gekennzeichnet, dass** die Organosilane unter folgendem ausgewählt sind:
Bis(3-triethoxysilylpropyl)amin, 3-Aminopropylmethyldiethoxysilan, Tetraethylorthosilicat, Phenyltriethoxysilan,
3-Aminopropyltriethoxysilan, 3-Aminopropyltrimethoxysilan,
Tetramethylorthosilicat, 3-Methacryloxypropyltrimethoxysilan,
Tetraethoxysilan, Methyltrimethoxysilan, Vinyltriethoxysilan,
Vinyltrimethoxysilan, Methyltriethoxysilan, Propyltrimethoxysilan,
Aminopropylmethyldiethoxysilan,
3-Methacryloxypropyltrimethoxysilan,
3-Mercaptopropyltrimethoxysilan,
N-(2-Aminoethyl)-3-aminopropyltrimethoxysilan,
3-Glycidyloxypropyltriethoxysilan.

4. Verfahren nach einem der Ansprüche 1 bis 3, **dadurch gekennzeichnet, dass** im Schritt e) der pH des Mediums von 2-3 bis zu ungefähr 5.5 erhöht wird.

5. Verfahren nach Anspruch 4, **dadurch gekennzeichnet, dass** der pH durch Zugabe von Ammoniakwasser, Natron oder Diethanolamin erhöht wird.

6. Verfahren nach einem der Ansprüche 1 bis 5, **dadurch gekennzeichnet, dass** die durch den Schritt e) erhaltene Mikrokapseln durch Trocknung oder Pulverisierung vereinzelt werden, um ein Pulver zu erhalten.

7. Verfahren nach einem der Ansprüche 1 bis 6, **dadurch gekennzeichnet, dass** das kationische Tensid ein Derivat der Zellulose ist.
